# FASCICULE DE BREVET EUROPEEN

(11) **EP 2 582 578 B1**
(45) Date de publication et mention de la délivrance du brevet: **11.06.2014**
(21) Numéro de dépôt: 11725125.6
(22) Date de dépôt: 16.06.2011
(51) Int. Cl.: B64C 25/10, B64C 25/34

(54) **ATTERRISSEUR PRINCIPAL D'AERONEF A DEUX BALANCIERS ARTICULES SUR LA STRUCTURE DE L'AERONEF**
HAUPTFAHRWERK EINES FLUGZEUGES MIT ZWEI AN DEN FLUGZEUGAUFBAU GELENKIG MONTIERTEN HUBBALKEN
MAIN LANDING GEAR OF AN AIRCRAFT, COMPRISING TWO WALKING BEAMS JOINED TO THE STRUCTURE OF THE AIRCRAFT IN AN ARTICULATED MANNER

(30) Priorité: 16.06.2010 FR 1054775
(43) Date de publication de la demande: 24.04.2013
(73) Titulaire: Messier-Bugatti-Dowty, 78140 Velizy Villacoublay (FR)
(72) Inventeur: DUCOS, Dominique, 91600 Savigny Sur Orge (FR)
(74) Mandataire: Parzy, Benjamin Alain
(86) Numéro de dépôt international: PCT/EP2011/060071
(87) Numéro de publication internationale: WO 2011/157807

(56) Documents cités:
- EP-A1- 0 631 929
- FR-A- 1 409 467

## Description

L'invention est relative à un atterrisseur principal d'aéronef à deux balanciers articulés sur la structure de l'aéronef.

### ARRIERE-PLAN TECHNOLOGIQUE

Dans le domaine des avions de transport militaire, on connaît des aéronefs munis d'atterrisseurs principaux fixés à une structure latérale du fuselage, comme par exemple les avions C160 Transall ou A400M. En général, les atterrisseurs principaux sont disposés de part et d'autre du fuselage, et sur chaque côté l'un derrière l'autre. Chaque atterrisseur comporte généralement un balancier ayant une extrémité qui reçoit un essieu portant deux roues. Le balancier est articulé selon un axe transversal soit sur un caisson de l'atterrisseur, soit directement sur une structure solidaire du fuselage. Dans ce dernier cas, un dispositif de rétraction tire sur l'amortisseur relié au balancier pour provoquer sa rotation vers une position rétractée dans laquelle le balancier et les roues sont reçus à l'intérieur d'un carénage latéral du fuselage.

On connaît par ailleurs des atterrisseurs de voilure comportant un caisson monté articulé sous la voilure selon un axe d'articulation, et dont l'extrémité base porte un pivot sur lequel deux balanciers portant chacun un essieu sont articulés, l'un des balanciers s'étendant vers l'avant, tandis que l'autre des balanciers s'étend vers l'arrière, comme par exemple sur les avions Caravelle ou Nimrod. L'atterrisseur inclut un dispositif d'amortissement comportant deux bielles attelées respectivement à l'un des balanciers, au moins l'une des bielles étant télescopique et formant amortisseur, les deux bielles étant par ailleurs attelées à un basculeur monté pivotant sur un pivot du caisson de l'atterrisseur. L'ensemble est pivotable en bloc autour de l'axe d'articulation du caisson pour être rétracté dans la structure de l'aéronef.

Les documents EP 0 631 929 et FR 1 409 467 illustrent notamment des atterrisseurs d'aéronef à deux balanciers de l'art antérieur.

### OBJET DE L'INVENTION

Un but de l'invention est de proposer un atterrisseur de fuselage combinant les avantages des formules précitées.

### BREVE DESCRIPTION DE L'INVENTION

En vue de la réalisation de ce but, on propose un atterrisseur d'aéronef comportant deux balanciers portant des roues et montés pour pivoter sur un pivot commun solidaire de l'aéronef et monté fixe sur la structure de ce dernier, l'atterrisseur comportant un dispositif d'amortissement comportant deux bielles attelées respectivement à l'un des balanciers, au moins l'une des bielles étant télescopique et formant amortisseur, les deux bielles étant par ailleurs attelées à un basculeur monté pivotant sur un pivot central qui est mobile entre une première position dans laquelle les balanciers sont en position d'atterrissage, et une deuxième position dans laquelle les balanciers sont en position rétractée.

Ainsi, les balanciers sont articulés directement sur la structure de l'aéronef, et pour la rétraction des balanciers, on utilise le basculeur dont on déplace le pivot pour tirer sur les bielles attelées aux balanciers afin de ramener les balanciers vers la position rétractée.

### BREVE DESCRIPTION DES FIGURES

L'invention sera mieux comprise à la lumière de la description qui suit des figures des dessins annexés, parmi lesquelles :
- la figure 1 est un vue de côté d'un atterrisseur de
- fuselage selon un mode particulier de réalisation de l'invention, l'atterrisseur étant représenté en position déployée avant l'atterrissage, deux des roues ayant été omises pour plus de clarté;
- la figure 2 est une figure analogue à la figure 1, montrant l'atterrisseur en position déployée après atterrissage ;
- la figure 3 est une vue de perspective de l'atterrisseur tel qu'illustré à la figure 1 ;
- les figures 4 et 5 sont respectivement identiques aux figures 1 et 3, si ce n'est que toutes les roues ont été représentées ;
- la figure 6 est une vue de côté de l'atterrisseur en position rétractée.

### DESCRIPTION DETAILLEE DES FIGURES

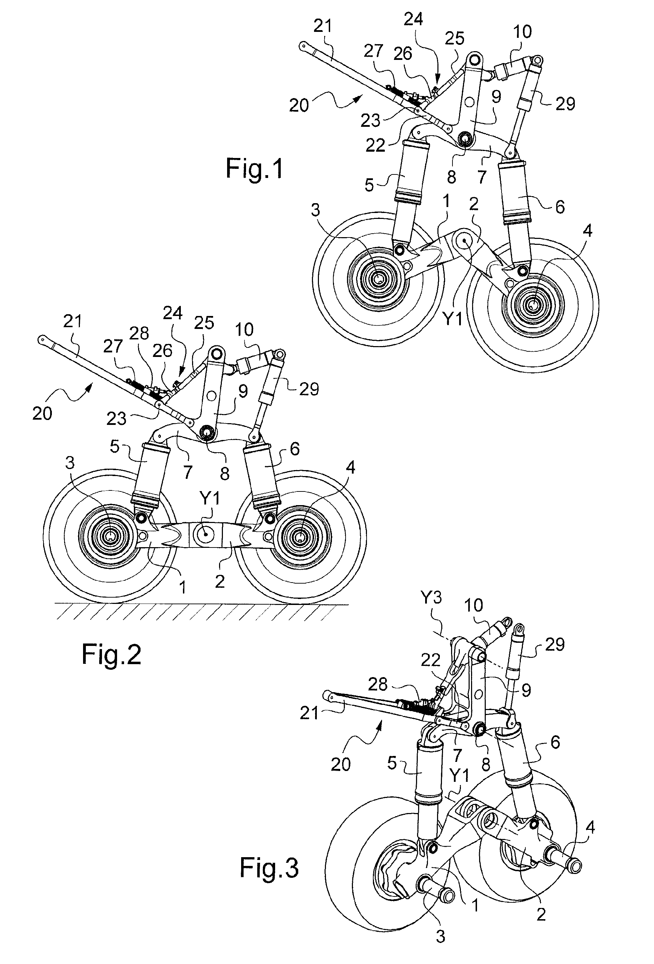

En référence aux figures 1,2,3,4,5, l'atterrisseur de l'invention comporte deux balanciers 1,2 ayant des extrémités proximales 1a, 2a articulées toutes deux sur un pivot fixe commun (non représenté ici, mais dont on distingue l'axe Y1) solidaire de l'aéronef et qui s'étend en saillie latérale du fuselage de l'aéronef selon une direction sensiblement horizontale. Les balanciers 1,2 ont des extrémités distales 1b, 2b recevant des essieux 3,4 portant chacun deux roues.

Deux bielles télescopiques formant amortisseurs 5,6 sont attelées d'une part aux balanciers 1,2 et d'autre part aux extrémités d'un basculeur 7.

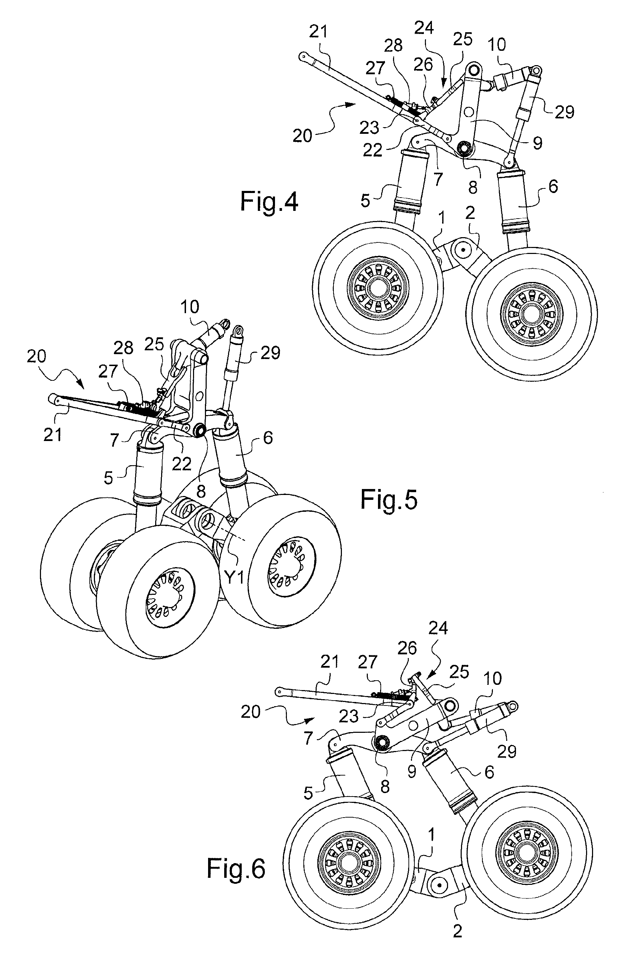

Le basculeur 7 est monté pivotant sur un pivot central 8 s'étendant selon un axe Y2 et porté à l'extrémité inférieure d'un panneau 9, l'extrémité supérieure du panneau 9 étant articulée sur un pivot fixe s'étendant selon un axe Y3 solidaire du fuselage de l'aéronef. Un actionneur de manoeuvre 10 attelé entre le fuselage et le panneau 9 permet de faire passer le panneau d'une position active illustrée aux figures 1,2,3,4,5 dans laquelle le panneau 9 maintient le pivot central 8 du basculeur sensiblement à l'aplomb du pivot commun des balanciers 1,2, cette position correspondant à une position d'atterrissage des balanciers, et une position escamotée illustrée à la figure 6 dans laquelle le panneau 9 a pivoté et tiré sur le basculeur 7, qui a lui-même tiré sur les amortisseurs 5,6 pour faire pivoter les balanciers 1,2 autour de leur pivot commun et ainsi rétracter les balanciers et les roues dans un logement latéral du fuselage (non représenté ici).

L'atterrisseur est équipé d'un dispositif de stabilisation du panneau 9 en position active, comportant ici une contrefiche 20 attelée entre le fuselage et le panneau 9, et comportant, de façon connue en soi, deux bras 21,22 articulés entre eux au niveau d'un genou 23 et maintenus en position sensiblement alignée au moyen d'un organe de verrouillage 24, comportant deux biellettes 25,26 articulées rappelées vers une position sensiblement alignée par un organe ressort 27 confirmant les biellettes en butée mutuelle dans ladite position sensiblement alignée. Un actionneur de déverrouillage 28 est monté pour briser l'alignement des biellettes de l'organe de verrouillage à l'encontre de l'organe de rappel, ce qui permet le repliement des bras de contrefiche et donc le pivotement du panneau 9 de sa position active vers la position escamotée.

Enfin, un positionneur télescopique à seuil 29 est articulé entre le basculeur 7 et la structure de l'aéronef pour former avec le panneau et le basculeur un dispositif à parallélogramme déformable qui maintient le basculeur 7 sensiblement dans une position parallèle à lui-même lors du pivotement du panneau entre la position active et la position escamotée. Néanmoins, le positionneur 29 peut se raccourcir sous l'action d'efforts du sol tendant à faire pivoter le basculeur. Ainsi, comme illustré à la figure 2 sur laquelle les balanciers sont en position sensiblement horizontal qu'ils adoptent lorsque l'aéronef est posé au sol et est chargé à sa masse maximale, on constate que les amortisseurs 5,6 sont enfoncés, mais également que le positionneur 25 a été légèrement comprimé, autorisant ainsi la rotation du basculeur 7 sous l'action des charges au sol.

Toutes les articulations mentionnées sont organisées selon des axes tous parallèles aux axes Y1,Y2,Y3.

L'invention n'est pas limitée à ce qui vient d'être décrit, mais englobe au contraire toute variante entrant dans le cadre défini par les revendications.

En particulier, bien que l'on ait indiqué que les deux bielles attelées entre les balanciers et le basculeur forment amortisseur, on pourra faire appel à une bielle rigide. Dans ce cas, l'autre bielle formant amortisseur aura une course doublée.

Bien que le pivot central du basculeur soit ici monté sur un panneau monté pivotant sur le fuselage entre une position active et une position escamotée, on pourra rendre le pivot mobile par d'autres moyens, par exemple en montant ce pivot en extrémité d'un organe télescopique dont les positions détendue et rétractée correspondent aux positions active et escamotée évoquées.

## Revendications

1. Atterrisseur d'aéronef comportant deux balanciers (1,2) portant des roues et montés pour pivoter sur un pivot commun (Y1), l'atterrisseur comportant un dispositif d'amortissement comportant deux bielles (5,6) attelées respectivement à l'un des balanciers, au moins l'une des bielles étant télescopique et formant amortisseur, les deux bielles étant par ailleurs attelées à un basculeur (7) monté pivotant sur un pivot central (8), **caractérisé en ce que** le pivot commun des balanciers est apte à être solidaire de la structure de l'aéronef et apte à être monté fixe sur celle-ci, tandis que le pivot central du basculeur est mobile entre une première position dans laquelle les balanciers sont en position d'atterrissage, et une deuxième position dans laquelle le basculeur a tiré sur les bielles pour faire pivoter les balanciers vers une position rétractée.

2. Atterrisseur d'aéronef selon la revendication 1, dans lequel le pivot du basculeur est monté à l'extrémité d'un panneau (9) qui est monté pivotant sur la structure de l'aéronef entre une position active dans laquelle le pivot du basculeur est sensiblement à l'aplomb du pivot commun des balanciers cette position correspondant à la position d'atterrissage des balanciers, et une position escamotée dans laquelle le basculeur a tiré sur les bielles pour faire pivoter les balanciers vers leur position rétractée.

3. Atterrisseur d'aéronef selon la revendication 2, dans lequel un positionneur à seuil (29) est attelé entre le basculeur et la structure de l'aéronef pour former avec le panneau et le basculeur un système à parallélogramme déformable.

4. Atterrisseur selon la revendication 2, dans lequel un actionneur de manoeuvre (10) est attelé entre le panneau et la structure de l'aéronef pour faire pivoter sélectivement le panneau entre la position active et la position escamotée.

5. Atterrisseur selon la revendication 2, dans lequel un dispositif de stabilisation (20) à alignement est attelé entre le panneau et la structure de l'aéronef pour stabiliser le panneau dans la position active.

## Patentansprüche

1. Flugzeugfahrwerk, umfassend zwei Schwenkträger (1, 2), die Räder tragen und an einem gemeinsamen Zapfen (Y1) schwenkbar gelagert sind, wobei das Fahrwerk eine Dämpfungsvorrichtung umfasst, die zwei Lenker (5, 6) umfasst, die jeweils an einen der Schwenkträger gekoppelt sind, wobei mindestens einer der Lenker teleskopisch ist und einen Stoßdämpfer bildet, wobei die beiden Lenker außerdem an einen Kipphebel (7) gekoppelt sind, der an einem zentralen Zapfen (8) schwenkbar gelagert ist, **dadurch gekennzeichnet, dass** der gemeinsame Zapfen der Schwenkträger dazu geeignet ist, mit der Struktur des Flugzeugs verbunden zu werden, und dazu geeignet ist, ortsfest an dieser angebracht zu werden, während der zentrale Zapfen des Kipphebels zwischen einer ersten Position, in der die Schwenkträger in der Landeposition sind, und einer zweiten Position beweglich ist, in der der Kipphebel an den Lenkern gezogen hat, um die Schwenkträger in eine eingezogene Position zu verschwenken.

2. Flugzeugfahrwerk nach Anspruch 1, wobei der Zapfen des Kipphebels an dem Ende einer Platte (9) befestigt ist, die an der Struktur des Flugzeugs zwischen einer aktiven Position, in der sich der Zapfen des Kipphebels im Wesentlichen senkrecht über dem gemeinsamen Zapfen der Schwenkträger befindet, wobei diese Position der Landeposition der Schwenkträger entspricht, und einer eingerückten Position schwenkbar gelagert ist, in der der Kipphebel an den Lenkern gezogen hat, um die Schwenkträger in ihre eingezogene Position zu verschwenken.

3. Flugzeugfahrwerk nach Anspruch 2, wobei ein Schwellwert-Positionshalter (29) zwischen dem Kipphebel und der Struktur des Flugzeugs gekoppelt ist, um mit der Platte und dem Kipphebel ein verformbares Parallelogramm-System auszubilden.

4. Fahrwerk nach Anspruch 2, wobei ein Stellaktuator (10) zwischen der Platte und der Struktur des Flugzeugs gekoppelt ist, um die Platte selektiv zwischen der aktiven Position und der eingezogenen Position zu verschwenken.

5. Fahrwerk nach Anspruch 2, wobei eine Ausricht-Stabilisierungsvorrichtung (20) zwischen der Platte und der Struktur des Flugzeugs gekoppelt ist, um die Platte in der aktiven Position zu stabilisieren.

## Claims

1. An aircraft undercarriage comprising two rocker beams (1, 2) carrying wheels and mounted to pivot on a common pivot (Y1), the undercarriage including a shock-absorber device comprising two connecting rods (5, 6), each coupled to a respective one of the rocker beams, at least one of the connecting rods being telescopic and forming a shock absorber, the two connecting rods also being coupled to a rocker (7) pivotally mounted on a central pivot (8), the undercarriage being **characterized in that** the common pivot of the rocker beams is secured to the structure of the aircraft and is mounted in a fixed position thereon, while the central pivot of the rocker is movable between a first position in which the rocker beams are in a landing position, and a second position in which the rocker has pulled on the connecting rods to cause the rocker beams to pivot towards a retracted position.

2. An aircraft undercarriage according to claim 1, wherein the pivot of the rocker is mounted at the end of a panel (9) that is pivotally mounted on the structure of the aircraft to pivot between an active position in which the pivot of the rocker is substantially vertically in register with the common pivot of the rocker beams, this position corresponding to the landing position of the rocker beams, and a retracted position in which the rocker has pulled on the connecting rods in order to cause the rocker beams to pivot towards their retracted position.

3. An aircraft undercarriage according to claim 2, wherein a threshold positioner (29) is coupled between the rocker and the structure of the aircraft to cooperate with the panel and the rocker to form a deformable parallelogram system.

4. An undercarriage according to claim 2, wherein a driving actuator (10) is coupled between the panel and the structure of the aircraft to cause the panel to pivot selectively between the active position and the retracted position.

5. An undercarriage according to claim 2, wherein an alignment stabilizer device (20) is coupled between the panel and the structure of the aircraft in order to stabilize the panel in the active position.
